# EUROPEAN PATENT SPECIFICATION

(11) **EP 3 450 219 B1**
(45) Date of publication and mention of the grant of the patent: **29.04.2020**
(21) Application number: 18188629.2
(22) Date of filing: 13.08.2018
(51) Int. Cl.: B60C 15/04

(54) **BEAD STRUCTURE FOR A PNEUMATIC TIRE**
WULSTSTRUKTUR FÜR EINEN LUFTREIFEN
STRUCTURE DE BOURRELET POUR PNEU

(30) Priority: 29.08.2017 US 201715689234
(43) Date of publication of application: 06.03.2019
(73) Proprietor: The Goodyear Tire & Rubber Company, Akron, OH 44316 (US)
(72) Inventor: KISH, James Christopher, Akron, OH 44319 (US)
(74) Representative: Kutsch, Bernd

(56) References cited:
- EP-A1- 0 141 942
- EP-A1- 2 703 191
- EP-A2- 1 526 005
- EP-A2- 2 644 410
- WO-A1-98/56600
- CN-A- 102 107 589
- FR-A1- 2 369 106
- JP-A- S63 149 207

## Description

### Field of the Present Invention

The present invention relates to a pneumatic tire intended to support vehicles and, more specifically, to a bead structure of such a tire.

### Background of the Present Invention

A conventional pneumatic tire comprises a crown part surmounted radially on the outside by a tread intended to come into contact with the roadway, this crown part extending radially inward by sidewalls ending in bead structures. The pneumatic tire comprises a plurality of reinforcement armatures including in particular a carcass reinforcement for supporting loads created by the tire internal inflation pressure and the vehicle. This carcass reinforcement extends into the crown and the sidewalls of the pneumatic tire and is anchored at its ends to appropriate anchoring structures located in the bead structures. A carcass reinforcement may be generally made up of a plurality of reinforcing members arranged parallel to one another and making an angle of, or in the region of, 90 degrees with the circumferential direction (in which case, the carcass reinforcement is said to be "radial"). The carcass reinforcement is usually anchored by turning it up around an anchoring structure of appropriate circumferential rigidity in order to form a turned-up portion of which the length, measured for example with respect to the radially innermost point of the anchoring structure, may be chosen to provide the pneumatic tire with satisfactory durability. Axially between the turned-up portion and the carcass reinforcement may be one or more elastomer-based materials which provide a mechanical coupling between the turned-up portions and the main carcass reinforcement.

In use, the pneumatic tire may be mounted on a rim with rim seats intended to contact the radially innermost parts of the bead structures. On the axially outer side of each rim seat, a rim flange may fix the axial position of each bead structure when the pneumatic tire is fitted onto the rim and inflated to its normal operational pressure.

In order to withstand the mechanical stresses of rotating under load, additional reinforcements may be provided for reinforcing the bead structures. For example, plies may be arranged against at least a part of the turned-up portion of the carcass reinforcement. During use, the bead structures may be subjected to a great many bending cycles, thereby conforming/deforming themselves to the rim flanges (e.g., partially adopting the geometry of the rim flanges). This results in greater or lesser variants in curvature of the bead structures combined with variations in tension in the reinforcement armatures that reinforce the bead structures and, in particular, in the turned-up portion of the carcass reinforcement. These same cycles may induce compressive and extensile loadings in the materials of the bead structures. Also, the reinforcing members of the carcass ply may shift circumferentially and cyclically in the sidewalls and the bead structures of the pneumatic tire. A cyclic circumferential shift is a shift in one circumferential direction and in the opposite circumferential direction each time the wheel and pneumatic tire revolve about a position of equilibrium (or no shift).

Stresses and/or deformations may be generated within the materials of the bead structures, and particularly within the elastomeric materials in the immediate vicinity of the ends of the reinforcements (the ends of the turned-up portions of the carcass reinforcement, or ends of the additional reinforcements). These stresses and/or deformations may lead to an appreciable reduction in the operating/service life of the pneumatic tire.

These stresses and/or deformations may cause delamination and cracking near the ends of the reinforcements and degradation of tire performance. Because of the radial direction of some of the reinforcing members and because of the nature of the reinforcing members (e.g., metal cables), the turned-up ends of the carcass reinforcement may be particularly sensitive to this phenomenon.

CN-A-102 107 589 describes a tire in accordance with the preamble of claim 1.

### Summary of the Present Invention

The invention relates to a pneumatic tire in accordance with claim 1.

Dependent claims refer to preferred embodiments of the invention.

A pneumatic tire in accordance with a preferred aspect of the present invention includes a carcass ply extending from one bead structure to another bead structure. Each bead structure includes a plurality of circumferentially wound metal wires surrounding a bead core. The monolithic bead core has a planar upper surface, a planar lower surface, and curved side surfaces. The planar upper surface and the planar lower surface both define cylindrical rings having rotational axes coincident with a rotating axis of the pneumatic tire.

According to another preferred aspect of the pneumatic tire of the present invention, each bead structure further includes a seat part intended to be in contact with a seat portion of a vehicle rim.

According to another preferred aspect of the pneumatic tire of the present invention, each bead structure further includes a cover profile coating the bead.

According to another preferred aspect of the pneumatic tire of the present invention, each bead structure further includes a chipper having a plurality of reinforcing members extending axially towards an inner surface of the carcass ply.

According to another preferred aspect of the pneumatic tire of the present invention, each chipper includes a first part in contact with the carcass ply along the axially inner portion of the bead structure and a second part in contact with a turned-up portion of the carcass ply along an axially outer portion of the bead structure.

According to another preferred aspect of the pneumatic tire of the present invention, each bead structure further includes an apex inserted between the carcass ply and the turned-up portion of the carcass ply.

According to another preferred aspect of the pneumatic tire of the present invention, each bead structure further includes a protrusion of the carcass ply extending radially inward and axially inward from an axial inner portion of each bead structure.

According to another preferred aspect of the pneumatic tire of the present invention, each bead core has an aspect ratio less than 1.0, alternatively less than 0.9 or 0.8.

A pneumatic tire in accordance with the present invention preferably includes two bead structures interconnected by a carcass ply. In one aspect of the invention, each bead structure includes a plurality of circumferentially metal wires wound around a one-piece bead core. Each bead core has a radial height to axial width ratio less than 1.0, alternatively less than 0.9 or 0.8.

### Brief Description of the Drawings

Further features and advantages of the present invention will become apparent from the description given hereinafter with reference to the attached drawings which, by way of non-limiting examples, show some embodiments of the subject matter of the present invention.
FIG. 1 shows a schematic representation of a bead structure in accordance with the present invention; and
FIG. 2 shows a detailed schematic representation of the bead structure of FIG. 1.

### Definitions

The following definitions are controlling for the present invention.

"Apex" means an elastomeric filler located radially above the bead core and between the plies and the turnup ply.

"Annular" means formed like a ring.

"Aspect ratio of a bead cross-section" means the ratio of a bead section height to its section width.

"Axial" and "axially" are used herein to refer to lines or directions that are parallel to the axis of rotation of the tire.

"Bead" or "bead portion" means that part of the tire comprising an annular tensile core wrapped by ply cords and shaped, with or without other reinforcement elements such as flippers, chippers, apexes, toe guards and chafers, to fit a design rim. The annular tensile core may be hollow, single-piece, monolithic, and/or of any suitable material, such as metal, ceramic, polymer, carbon, carbon fibers, polyamide, glass, and/or glass fibers.

"Carcass" means the tire structure apart from the belt structure, tread, undertread, and sidewall rubber over the plies, but including the beads.

"Chipper" refers to a preferably narrow band of fabric or steel cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.

"Equatorial plane (EP)" means the plane perpendicular to the tire's axis of rotation and passing through the center of its tread; or the plane containing the circumferential centerline of the tread.

"Ply" means a cord-reinforced layer of rubber-coated radially deployed or otherwise parallel cords.

"Radial" and "radially" are used to mean directions radially toward or away from the axis of rotation of the tire.

"Turnup end" means the portion of a carcass ply that turns upward (i.e., radially outward) from the beads about which the ply is wrapped.

### Description of Example Embodiments of the Present Invention

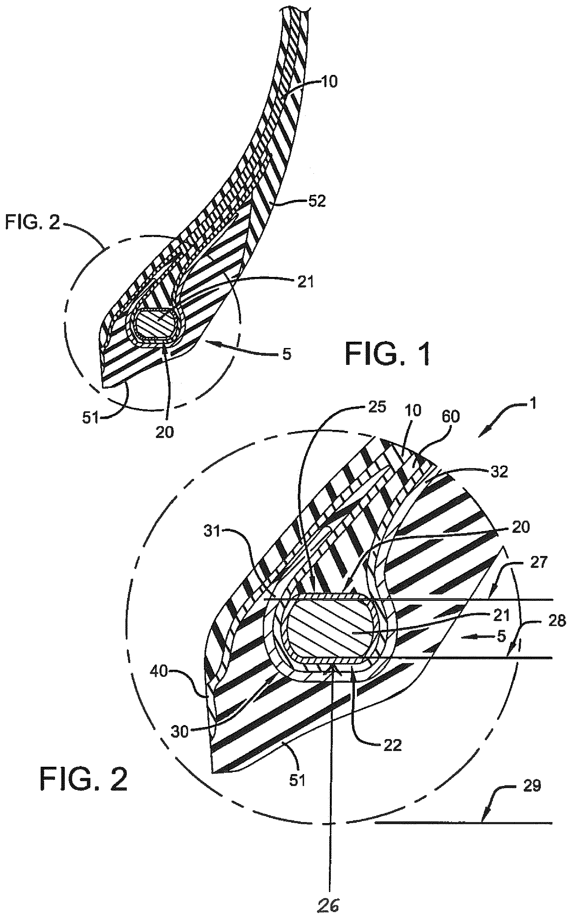

FIGS. 1 and 2 show an example bead structure 5 of a pneumatic tire 1 in accordance with the present invention. The pneumatic tire 1 may be mounted on a mounting rim (not shown) of which the bead structure 5 seats during rotation of the pneumatic tire under load. The bead structure 5 may comprise a seat part 51 intended to be in contact with a seat portion of the rim. This seat part 51 preferably extends axially outwards through an external part 52. A hook flange of the mounting rim preferably axially limits the extent to which the bead structure 5 may shift axially when the pneumatic tire 1 is inflated and under load. Under such operational conditions, the external part 52 of the bead structure 5 may wind/encompass itself around the hook flange to some extent.

A carcass ply 10 of the pneumatic tire 1 may have a plurality of metal cords formed of several elemental wires. These metal cords may be embedded in an elastomeric compound and directed substantially in a radial direction. The carcass ply 10 is preferably be anchored at one of its ends around an anchoring structure 20 of the bead structure 5. The anchoring structure 20 preferably comprises a cover profile 22 coating a circumferential reinforcement armature or bead core 21 (e.g., a bead of a plurality of metal wires circumferentially wound about a bead core 21). The carcass ply 10 preferably encases the cover profile 22, thereby being mechanically coupled to the cover profile by adhesion to the carcass ply.

A first reinforcement, or chipper 30, having a plurality of reinforcing members preferably extends axially towards an inner surface (e.g., bead-side surface) of the carcass ply. A first part 31 of the chipper 30 is preferably in contact with the carcass ply 10 along the axially inner portion of the bead structure 5. A second part 32 of the chipper 30 is preferably in contact with the turned-up portion of the carcass ply 10 along the axially outer portion of the bead structure 5. An apex 60 of a suitable elastomeric compound is preferably inserted between the carcass ply 10 and the turned-up portion of the carcass ply.

The bead structure 5 may further include a second reinforcement, or protrusion 40 of the carcass ply 10 extending radially inward and axially inward from the axial inner portion of the bead structure 5. This protrusion 40 may increase strength and durability of the bead structure 5 during operation of the pneumatic tire 1 under loaded conditions.

The bead structure 5 in accordance with the present invention increases performance characteristics of conventional bead structures (e.g., bead structures of radial aircraft tires, high performance passenger tires, etc.). Conventionally, the core of cable beads is only available with circular cross-section. The core is the annular ring that serves as the center of the bead construction. This core may be made of a steel or aluminum alloy. A weld secures the two ends together. Layers of wires may then be applied over and around the core in alternating S and Z directions. Many high strength composites and manufacturing techniques (e.g., 3D printing, molding, etc.) may be used to construct a semi-rectangular bead core. Benefits of such bead cores are many.

Metal may require cold working that exceeds the yield point of the metal. Thus, a machine may be required to bend the wire rod into shape and account for spring-back. The machine may have many wearable parts and requite maintenance on a regular basis. Materials that have some fluctuation in their properties may cause scrap to be generated until settings are recalibrated and optimized. With moldable bead cores, flatness may be guaranteed thereby eliminating the weld and grinding of the flash. Further, the moldable bead core may be lighter than aluminum and may endure curing of the tire without deformation of its shape.

In accordance with the present invention, a bead core 21 with semi-rectangular section, or a flat top (radially outer) surface 25 and a flat (radially inner) bottom surface 26 provides an additional opportunity to tune functional properties of the bead structure 5. Instead of the conventional circular cross-section, a semi-rectangular cross-section defines an aspect ratio. As with pneumatic tire cavity constructions, certain aspect ratios for the bead core 21 may be more desirable than others (e.g. beads may have more beneficial aspect ratios than others, etc.). The method of green tire building can remain the same with no added complexity. No step orienting of the bead structure 5 need be performed to build the tire. Similar to current methods, a tire builder may simply 'grab and go' when placing a bead 21 on a bead setter machine. As shown in FIG. 2, the planar upper surface 25 (also called top surface) and the planar lower surface 26 (also called bottom surface) of the bead core 21 both define cylindrical rings 27, 28, respectively, having rotational axes coincident with a rotating axis 29 of the pneumatic tire.

Hence, the tire 1 is preferably symmetric with respect to its bead structure 5 with each bead structure 5 comprising a bead core 21 having in cross-section, i.e. in a plane including the axis of rotation 29 of the tire 1 and extending along a radial direction of the tire 1, a planar radially upper or top surface 25, a planar radially lower or bottom surface 26, and two curved side surfaces. The line 27 extending along the planar radially upper or top surface 25 and the line 28 extending along the planar radially upper or top surface 26 both extend in parallel, i.e. strictly in parallel or under an angle of +/- 3 degrees or less or under an angle of +/- 1 degree or less, to the axis of rotation 29 of the pneumatic tire 1.

Each bead structure 5 comprises a bead core 21 being a one-piece or monolithic bead core 21 having a radial height to axial width ratio less than 1.0, alternatively less than 0.9 or less than 0.8.

The bead structure 5 in accordance with the invention creates a more even distribution of contact forces/stresses with the mounting rim than conventional bead structures.

With conventional bead structures a peak load may occur directly under the actual bead seat and taper off steeply to lower loads away from the bead seat. The bead core 21 with semi-rectangular shape may thus have a more uniform contact pressure with the mounting rim thereby prevent slip between the bead structure 5 and the mounting rim.

As stated above, a bead structure 5 in accordance with the present invention allows reduces slippage between the bead structure and the mounting rim. These bead structures 5 thus enhance the performance of the pneumatic tire 1, even though the complexities of the structure and behavior of the pneumatic tire are such that no complete and satisfactory theoretical model has been accepted.

The above description is given in reference to example embodiments of a tire having a tread portion for reducing rolling resistance and increasing fuel economy.

## Claims

1. A pneumatic tire comprising at least one bead structure (5) comprising a bead core (21), wherein the bead core (21) has in cross-section a planar radially upper or top surface (25), a planar radially lower or bottom surface (26), and two curved side surfaces, wherein the line (27) extending along the planar radially upper or top surface (25) and the line (28) extending along the planar radially lower or bottom surface (26) both extend in parallel to the axis of rotation (29) of the pneumatic tire (1), wherein the bead core (21) is a one-piece or monolithic bead core (21) having a radial height to axial width ratio less than 1.0, alternatively less than 0.9 or less than 0.8, **characterized in that** the planar radially upper or top surface (25), the planar radially lower or bottom surface (26) and the two curved side surfaces form the circumference of the cross-section of the bead core (21).

2. The pneumatic tire of claim 1 wherein the planar radially upper or top surface (25) and the planar radially lower or bottom surface (26) each define a circumferentially extending cylindrical ring having rotational axes coincident with the axis of rotation (29) of the pneumatic tire (1).

3. The pneumatic tire of claim 1 or 2 comprising two of said bead structures (5).

4. The pneumatic tire of claim 3 comprising a carcass ply (10) extending from one of said bead structures (5) to the other one of said bead structures (5).

5. The pneumatic tire of at least one of the previous claims wherein at least one or both of said bead structures (5) comprise a plurality of filaments or metal wires (20) surrounding the respective bead core (21).

6. The pneumatic tire of claim 5 wherein the plurality of filaments or metal wires (20) surrounding the respective bead core (21) are filaments or metal wires (20) circumferentially wound around the respective bead core.

7. The pneumatic tire of at least one of the previous claims wherein at least one or both of said bead structures (5) further comprise a cover profile (22) coating the respective bead core (21).

8. The pneumatic tire of at least one of the previous claims wherein at least one or both of said bead structures (5) further includes a chipper (30) having a plurality of reinforcing members preferably extending axially towards an axially inner surface of the carcass ply (10).

9. The pneumatic tire of claim 8 wherein the chipper (30) includes a first part (31) in contact with the carcass ply (10) along the axially inner portion of the bead structure (5) and a second part (32) in contact with a turned-up portion of the carcass ply (10) along an axially outer portion of the bead structure (5).

10. The pneumatic tire of at least one of the previous claims wherein at least one or both of said bead structures (5) further includes an apex (60) inserted between a radially downwardly extending part of the carcass ply (10) and the turned-up portion of the carcass ply (10).

11. The pneumatic tire of at least one of the previous claims wherein at least one or both of said bead structures (5) further includes a protrusion (40) of the carcass ply (10) extending radially inward and axially inward from an axial inner portion of each bead core (21).

12. The pneumatic tire of at least one of the previous claims wherein at least one or both of said bead cores (21) has an aspect ratio, i. e. a ratio of radial height to axial width, less than 1.0, alternatively less than 0.9 or less than 0.8.

## Patentansprüche

1. Luftreifen, umfassend wenigstens eine Wulststruktur (5), umfassend einen Wulstkern (21), wobei der Wulstkern (21) in einem Querschnitt eine ebene radial höhere oder obere Oberfläche (25), eine ebene radial niedrige oder untere Oberfläche (26) und zwei gekrümmte Seitenoberflächen aufweist, wobei die Linie (27) sich entlang der ebenen radial höheren oder oberen Oberfläche (25) erstreckt und die Linie (28) sich entlang der ebenen radial niedrigen oder unteren Oberfläche (26) erstreckt, wobei sich beide parallel zu der Drehachse (29) des Luftreifens (1) erstrecken, wobei der Wulstkern (21) ein einstückiger oder monolithischer Wulstkern (21) mit einem Verhältnis von radialer Höhe zu axialer Breite von weniger als 1,0 ist, alternativ weniger als 0,9 oder höchstens 0,8, **dadurch gekennzeichnet, dass** die ebene radial höhere oder obere Oberfläche (25), die ebene radial niedrige oder untere Oberfläche (26) und die beiden gekrümmten Seitenoberflächen den Umfang des Querschnitts des Wulstkerns (21) ausbilden.

2. Luftreifen nach Anspruch 1, wobei die ebene radial höhere oder obere Oberfläche (25) und die ebene radial niedrige oder untere Oberfläche (26) jeweils einen sich umlaufend erstreckenden zylindrischen Ring definieren, der Drehachsen aufweist, die mit der Drehachse (29) des Luftreifens (1) zusammenfallen.

3. Luftreifen nach Anspruch 1 oder 2, umfassend zwei der Wulststrukturen (5).

4. Luftreifen nach Anspruch 3, umfassend eine Karkassenlage (10), die sich von einer der Wulststrukturen (5) zu der anderen der Wulststrukturen (5) erstreckt.

5. Luftreifen nach wenigstens einem der vorhergehenden Ansprüche, wobei wenigstens eine oder beide der Wulststrukturen (5) mehrere Filamente oder Metalldrähte (20) umfassen, die den jeweiligen Wulstkern (21) umgeben.

6. Luftreifen nach Anspruch 5, wobei die mehreren Filamente oder Metalldrähte (20), die den jeweiligen Wulstkern (21) umgeben, Filamente oder Metalldrähte (20) sind, die umlaufend um den jeweiligen Wulstkern gewickelt sind.

7. Luftreifen nach wenigstens einem der vorhergehenden Ansprüche, wobei wenigstens eine oder beide der Wulststrukturen (5) ferner ein Abdeckprofil (22) umfassen, das den jeweiligen Wulstkern (21) beschichtet.

8. Luftreifen nach wenigstens einem der vorhergehenden Ansprüche, wobei wenigstens eine oder beide der Wulststrukturen (5) ferner eine Wulstverstärkung (30) mit mehreren verstärkenden Elementen beinhalten, die sich vorzugsweise axial in Richtung einer axial inneren Oberfläche der Karkassenlage (10) erstrecken.

9. Luftreifen nach Anspruch 8, wobei der Wulstverstärkung (30) einen ersten Teil (31) in Berührung mit der Karkassenlage (10) entlang des axial inneren Abschnitts der Wulststruktur (5) und einen zweiten Teil (32) in Berührung mit einem hochgeschlagenen Abschnitt der Karkassenlage (10) entlang eines axial äußeren Abschnitts der Wulststruktur (5) beinhaltet.

10. Luftreifen nach wenigstens einem der vorhergehenden Ansprüche, wobei wenigstens eine oder beide der Wulststrukturen (5) ferner einen Kernreiter (60) beinhalten, der zwischen einem sich radial nach unten erstreckenden Teil der Karkassenlage (10) und dem hochgeschlagenen Abschnitt der Karkassenlage (10) eingefügt ist.

11. Luftreifen nach wenigstens einem der vorhergehenden Ansprüche, wobei wenigstens eine oder beide der Wulststrukturen (5) ferner einen Vorsprung (40) der Karkassenlage (10) beinhalten, der sich von einem axial inneren Abschnitt jedes Wulstkerns (21) radial nach innen und axial nach innen erstreckt.

12. Luftreifen nach wenigstens einem der vorhergehenden Ansprüche, wobei wenigstens einer oder beide der Wulstkerne (21) ein Höhen-/Breiten-Verhältnis, d.h. ein Verhältnis von radialer Höhe zu axialer Breite, von weniger als 1,0, alternativ weniger als 0,9 oder höchstens 0,8 aufweisen.

## Revendications

1. Bandage pneumatique comprenant au moins une structure de talon (5) qui comprend une tringle de talon (21) ; dans lequel la tringle de talon (21) possède, en section transversale, une surface supérieure ou de sommet (25) de forme plane s'étendant en direction radiale, une surface inférieure ou de base (26) de forme plane s'étendant en direction radiale, et deux surfaces latérales courbes ; dans lequel la ligne (27) s'étendant le long de la surface supérieure ou de sommet (25) de forme plane s'étendant en direction radiale et la ligne (28) s'étendant le long de surface inférieure ou de base (26) de forme plane s'étendant en direction radiale s'étendent toutes deux parallèlement à l'axe de rotation (29) du bandage pneumatique (1) ; dans lequel la tringle de talon (21) représente une tringle de talon monolithique ou en une seule pièce (21) qui possède un rapport de la hauteur radiale à la largeur axiale qui est inférieur à 1,0, en variante inférieur à 0,9 ou inférieur à 0,8 ; **caractérisé en ce que** la surface supérieure ou de sommet (25) de forme plane s'étendant en direction radiale, la surface inférieure ou de base (26) de forme plane s'étendant en direction radiale, et les deux surfaces latérales courbes forment la circonférence de la section transversale de la tringle de talon (21).

2. Bandage pneumatique selon la revendication 1, dans lequel la surface supérieure ou de sommet (25) de forme plane s'étendant en direction radiale et la surface inférieure ou de base (26) de forme plane s'étendant en direction radiale définissent chacune un anneau cylindrique s'étendant en direction circonférentielle, qui possèdent des axes de rotation qui coïncident avec l'axe de rotation (29) du bandage pneumatique (1).

3. Bandage pneumatique selon la revendication 1 ou 2, comprenant deux desdites structures de talons (5).

4. Bandage pneumatique selon la revendication 3, comprenant une nappe de carcasse (10) s'étendant à partir d'une structure parmi lesdites structures de talons (5) jusqu'à l'autre structure parmi lesdites structures de talons (5).

5. Bandage pneumatique selon au moins une des revendications précédentes, dans lequel au moins une desdites structures de talons (5) ou lesdites deux structures de talons (5) comprennent un certain nombre de filaments ou de fils métalliques (20) qui entourent la tringle de talon respective (21).

6. Bandage pneumatique selon la revendication 5, dans lequel lesdits plusieurs filaments ou fils métalliques (20) qui entourent la tringle de talon respective (21) représentent des filaments ou des fils métalliques (20) qui viennent s'enrouler en direction circonférentielle autour de la tringle de talon respective.

7. Bandage pneumatique selon au moins une des revendications précédentes, dans lequel au moins une desdites structures de talons (5) ou lesdites deux structures de talons (5) comprennent en outre un profilé de recouvrement (22) qui recouvre la tringle de talon respective (21).

8. Bandage pneumatique selon au moins une des revendications précédentes, dans lequel au moins une desdites structures de talons (5) ou lesdites deux structures de talons (5) englobent en outre une bandelette de renfort de talon (30) possédant un certain nombre d'éléments de renforcement s'étendant de préférence en direction axiale dans la direction d'une surface interne en direction axiale de la nappe de carcasse (10).

9. Bandage pneumatique selon la revendication 8, dans lequel la bandelette de renfort de talon (30) englobe une première partie (31) qui est mise en contact avec la nappe de carcasse (10) le long de la portion de la structure de talon (5), interne en direction axiale, et une seconde partie (32) qui est mise en contact avec une portion de retournement vers le haut de la nappe de carcasse (10) le long d'une portion de la structure de talon (5), externe en direction axiale.

10. Bandage pneumatique selon au moins une des revendications précédentes, dans lequel au moins une desdites structures de talons (5) ou lesdites deux structures de talons (5) englobent en outre un bourrage sur tringle (60) inséré entre une partie de la nappe de carcasse (10) s'étendant vers le bas en direction radiale et la portion de retournement vers le haut de la nappe de carcasse (10).

11. Bandage pneumatique selon au moins une des revendications précédentes, dans lequel au moins une desdites structures de talons (5) ou lesdites deux structures de talons (5) englobent en outre une protrusion (40) de la nappe de carcasse (10) s'étendant vers l'intérieur en direction radiale et vers l'intérieur en direction axiale à partir d'une portion interne axiale de chaque tringle de talon (21).

12. Bandage pneumatique selon au moins une des revendications précédentes, dans lequel au moins une desdites structures de talons (5) ou lesdites deux structures de talons (5) possèdent un rapport nominal d'aspect, c'est-à-dire un rapport de la hauteur radiale à la largeur axiale, inférieur à 1,0, en variante inférieur à 0,9 ou inférieur à 0,8.
